## Europäisches Patentamt
## European Patent Office
## Office européen des brevets

(19)

(11) Numéro de publication: **0 064 943**
**A1**

(12) # DEMANDE DE BREVET EUROPEEN

(21) Numéro de dépôt: **82810173.3**

(51) Int. Cl.³: **H 01 M 10/04**

(22) Date de dépôt: **27.04.82**

(30) Priorité: **30.04.81 CH 2819/81**

(43) Date de publication de la demande:
**17.11.82 Bulletin 82/46**

(84) Etats contractants désignés:
**AT BE CH DE FR GB IT LI LU NL SE**

(71) Demandeur: **BATTELLE MEMORIAL INSTITUTE**
**7 route de Drize**
**CH-1227 Carouge/Genève(CH)**

(72) Inventeur: **Guignard, Claude**
**Le Vezely Sergy Gare**
**F-01630 Saint Genis Pouilly(FR)**

(72) Inventeur: **Steffens, François**
**91, Avenue du Bois de la Chapelle**
**CH-1213 Onex(CH)**

(74) Mandataire: **Dousse, Blasco et al,**
**7, route de Drize**
**CH-1227 Carouge/Genève(CH)**

(54) **Paquet d'électrodes pour générateur électrochimique, procédé de fabrication de ce paquet et dispositif pour la mise en oeuvre de ce procédé.**

(57) Un ruban d'un matériau à perméabilité ionique (45) est enroulé autour des bords latéraux des électrodes (30) présentant des pattes de connexion (30a), en partant de l'électrode centrale vers les électrodes périphériques, de sorte qu'une nappe de ce matériau sépare les électrodes adjacentes. Une fois le paquet terminé le ruban (45) est coupé et soudé à l'aide d'un fil chauffant (41). Les bords des nappes de ruban adjacents aux bords inférieurs des électrodes 30 sont réunis les uns aux autres soit par une couche de matière thermoplastique soit par un soudage de toutes les nappes rassemblées les unes contre les autres. Pour fabriquer ce paquet d'électrodes on utilise deux gabarits (27, 28) pour positionner les pattes de connexion des électrodes positives respectivement négatives et on entraîne ces gabarits en rotation pas à pas pour enrouler le ruban (45) et déposer au fur et à mesure les électrodes positives et négatives.

FIG. 2

## PAQUET D'ELECTRODES POUR GENERATEUR ELECTROCHIMIQUE

## PROCEDE DE FABRICATION DE CE PAQUET

## ET DISPOSITIF POUR LA MISE EN OEUVRE DE CE PROCEDE

La présente invention se rapporte à un paquet d'électrodes pour générateur électrochimique, à un procédé de fabrication de ce paquet et à un dispositif pour la mise en oeuvre de ce procédé.

Il a déjà été proposé, dans le brevet CH 455 896 par exemple, de former un tel paquet d'électrodes en disposant les électrodes d'une polarité, reliées entre elles, dans un ruban plié longitudinalement et les électrodes de l'autre polarité, reliées entre elles, contre une des faces externes de ce ruban, et en pliant le ruban transversalement entre les électrodes pour former un accordéon.

Cette solution présente plusieurs inconvénients, notamment celui de la formation de plis en accordéon et celui de la nécessité d'un positionnement correct des pattes de connexion lorsque l'on désire utiliser cette technique avec des électrodes séparées, les pattes de connexion des électrodes de chaque polarité devant toutes se trouver le long de l'un des deux bords supérieurs opposés du paquet d'électrodes. Par ailleurs, un tel paquet d'électrodes, ne forme pas un ensemble cohérent du fait qu'une partie des électrodes se trouve à l'extérieur du pli longitudinal du ruban et que les plis transversaux en accordéon n'empêchent pas l'écartement des électrodes ainsi réunies, de sorte que la manipulation d'un tel paquet nécessite des précautions particulières en cours de fabrication.

Il a certes déjà été proposé, dans le brevet CH 353 778, d'enrouler deux électrodes continues avec interposition d'un séparateur, pour former un élément d'un petit accumulateur. Une telle technique n'est évidemment pas applicable à des batteries plus grandes en raison, notamment, de la place perdue qui en résulte, la forme du paquet ainsi obtenu se rapprochant de plus en plus de celle d'un rouleau, alors qu'un compartiment de bac d'accumulateur est, comme on le sait de forme parallélépipédique.

L'idée générale d'enrouler un ruban souple autour des électrodes pour former un paquet d'électrodes est divulguée par le brevet US 3 425 871. Ce ruban souple comporte des fenêtres dans lesquelles des séparateurs rigides sont insérés. Ce ruban est enroulé d'une électrode extérieure à l'autre électrode extérieure du paquet, de sorte que des couches de ruban se superposent du côté externe de la première des électrodes extérieures du paquet, le nombre de ces couches ainsi superposées dépendant du nombre d'électrodes du paquet. Ces couches ainsi superposées sont de la matière perdue et le volume qu'elles occupent dans le bac est un volume mort. Etant donné, par ailleurs, que ce ruban est enroulé autour des bords supérieurs et inférieurs des électrodes, et que pour ménager les fenêtres recevant les séparateurs la largeur du ruban doit être plus grande que la longueur de ces bords supérieurs et inférieurs, il n'est pas précisé comment on entend réaliser la connexion des électrodes aux bornes.

Le but de la présente invention est de permettre la formation de paquets d'électrodes à l'aide d'un procédé simple susceptible d'accroître très sensiblement la productivité de la fabrication de batteries.

A cet effet, la présente invention a, tout d'abord, pour objet, un paquet d'électrodes pour générateur électrochimique formé de deux séries d'électrodes de polarités positives, respectivement négatives alternées, ces électrodes étant réunies par un ruban passant entre elles et autour de deux de leurs bords opposés, caractérisé par le fait que ce ruban s'étend d'une électrode centrale vers les électrodes extérieures, chaque nappe de ruban parallèle aux électrodes passant entre deux électrodes adjacentes, les portions de ruban s'étendant entre ces nappes enveloppant les bords latéraux de ces électrodes.

Cette invention a également pour objet un procédé de fabrication de ce paquet d'électrodes, caractérisé par le fait que l'on enroule une nappe d'au moins un ruban de chaque côté d'une électrode rectangulaire de l'une desdites polarités présentant une patte de connexion à proximité de l'un de ses bords latéraux, qu'on applique contre la face externe de chacune de ces nappes une électrode de l'autre polarité présentant chacune une borne de connexion à proximité de l'autre bord latéral, qu'on enroule une nappe dudit ruban autour de chacune de ces deux électrodes, qu'on ajoute, de part et d'autre des faces extérieures de ces nappes, deux électrodes de la première polarité avec leurs bornes respectives disposées vis-à-vis de la borne de la première électrode, qu'on enroule autour de ces électrodes une nappe dudit ruban et ainsi de suite en ajoutant chaque fois deux électrodes alternativement de l'une et l'autre polarité jusqu'à l'obtention du nombre désiré d'électrodes de chaque polarité, qu'on coupe ledit ruban, qu'on fixe son extrémité contre la face externe de l'une des nappes externes et qu'on ferme le fond de chaque compartiment ménagé entre deux nappes adjacentes.

Cette invention a enfin pour objet un dispositif pour la mise en oeuvre de ce procédé, caractérisé par le fait qu'il comporte deux gabarits de positionnement des pattes de connexion des électrodes des polarités positive, respectivement négative, un organe d'entraînement monté autour d'un axe de rotation, cet organe portant lesdits gabarits disposés à 180° l'un de l'autre, un rouleau d'alimentation dudit ruban monté autour d'un axe de rotation parallèle à celui dudit organe d'entraînement, deux dispositifs d'alimentation des paires d'électrodes négatives respectivement positives des deux gabarits respectifs et des moyens pour couper ledit ruban et souder l'extrémité de sa portion enroulée, autour du paquet d'électrodes.

Parmi les avantages de la présente invention, on peut mentionner le fait que le paquet d'électrodes forme un bloc enveloppé par le ruban, l'extrémité du ruban pouvant être fixée autour du paquet. De ce fait, toutes les électrodes sont retenues dans ce paquet qui forme ainsi un ensemble inséparable et se prête parfaitement bien aux manipulations ultérieures intervenant dans le processus de fabrication et précédant son introduction dans un compartiment du bac de la batterie. En outre, le procédé de fabrication et le dispositif pour sa mise en oeuvre permettent une productivité élevée notamment en raison du mouvement d'enroulement circulaire qui est mécaniquement simple à réaliser ce qui suppose un dispositif d'une grande fiabilité entraînant un investissement réduit. On peut aussi relever que le dispositif selon l'invention apporte une solution extrêmement simple au problème du positionnement des pattes de connexion des électrodes, toutes les électrodes positives aussi bien que négatives étant amenées dans la même position, ce qui constitue également une simplification considérable qui permet d'éviter l'emploi d'une robotique relativement complexe.

Le dessin annexé illustre, très schématiquement et à titre d'exemple, une forme d'exécution et une variante du paquet d'électrodes ainsi qu'une forme d'exécution du dispositif pour la mise en oeuvre de son procédé de fabrication :

La fig. 1 est une vue en élévation de face de ce dispositif;

La fig. 2 est une vue en coupe selon II-II de la fig. 1;

La fig. 3 est un schéma du mécanisme d'entraînement de ce dispositif.

Les figs 4a à 4i sont des vues en élévation de profil de différentes étapes du procédé.

La fig. 5 est une vue en élévation de face d'une opération de séparation des paquets d'électrodes produits au cours des opérations des figs 4a à 4i.

La fig. 6 est une vue en élévation montrant l'exécution d'une étape finale du procédé.

La fig. 7 est une vue d'une variante de la fig. 1.

La fig. 8 est une vue de profil d'un double paquet d'électrodes en cours de séparation.

La fig. 9 est une vue en élévation de la formation d'un paquet d'électrodes selon une autre variante.

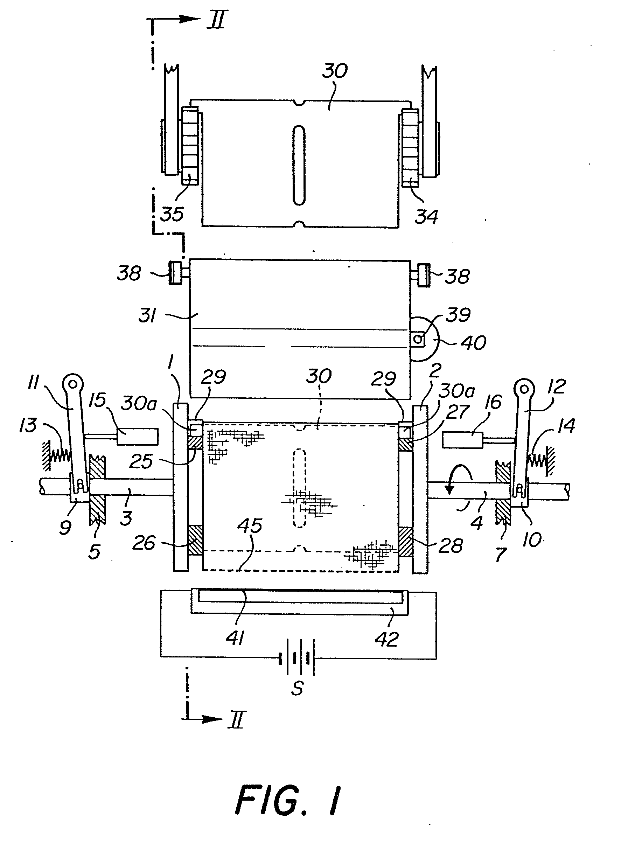

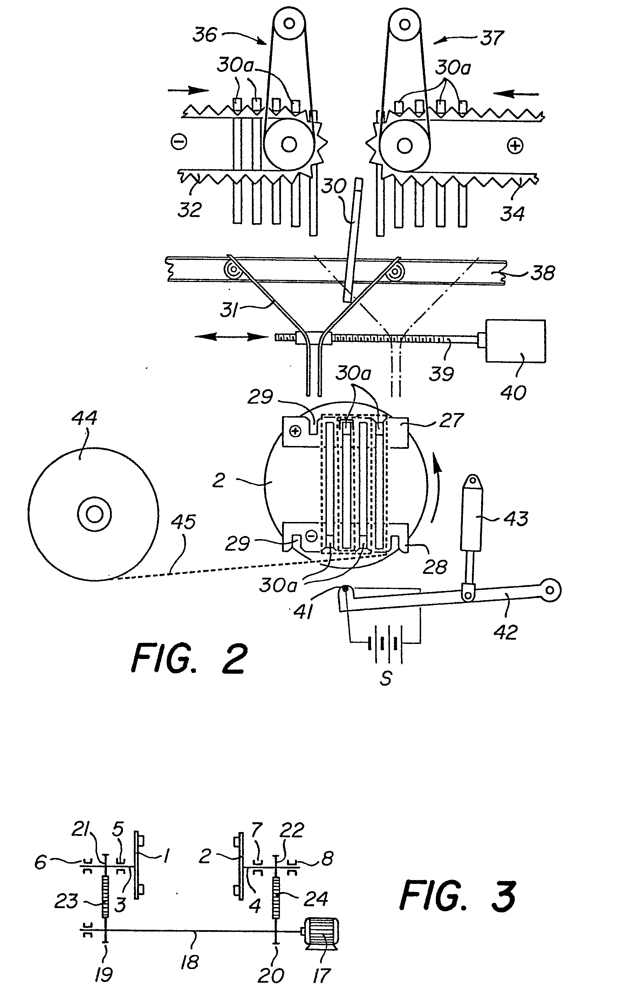

Le dispositif illustré par les figs 1 à 3 présente deux plateaux parallèles 1 et 2, montés rotativement autour d'un axe commun, par l'intermédiaire de deux arbres 3 et 4 solidaires des faces externes respectives de ces plateaux 1 et 2. Chacun des arbres 3 et 4 est monté coulissant dans deux paliers 5 et 6, respectivement 7 et 8 (fig. 3) et porte un roulement à billes 9, respectivement 10 en prise avec un levier à fourche 11, respectivement 12, sollicité par un ressort 13, respectivement 14, appliquant le roulement à bille 9, respectivement 10 contre le palier 5 respectivement 7. Chaque levier à fourche 11 et 12 est associé à un organe d'actionnement constitué par un vérin ou un électro-aimant 15 respectivement 16 et destiné à le faire basculer à l'encontre de la pression exercée par le ressort 13 respectivement 14, afin d'écarter les plateaux 1 et 2 l'un de l'autre pour dégager les paquets d'électrodes terminés.

Ces plateaux 1 et 2 sont entraînés en rotation dans le même sens par un moteur 17 (fig. 3) dont l'arbre d'entraînement 18 porte deux poulies 19 et 20 reliées à deux autres poulies 21, respectivement 22, calées sur les arbres 3, respectivement 4, par des courroies crantées 23, respectivement 24.

Chacun de ces plateaux 1 et 2 porte une paire de gabarits 25, 26 respectivement 27, 28, présentant chacun une série de rainures de positionnement 29, des pattes de connexion 30a, des électrodes doubles 30. Les deux gabarits de chaque plateau sont parallèles l'un à l'autre, mais leurs rainures de positionnement 29 respectives s'ouvrent le long de leurs bords extérieurs, de sorte que ces gabarits occupent en fait des positions angulaires à 180° l'un de l'autre. Le nombre de rainures de positionnement 29 des deux gabarits de chaque paire diffère d'une unité étant donné que, dans la pratique, chaque paquet d'électrodes comporte une électrode négative de plus qu'une électrode positive. Bien entendu, les positions angulaires des gabarits 25, 27, respectivement 26, 28, présentant le même nombre de rainures de positionnement sur les deux plateaux 1 et 2, coïncident. Grâce à cette disposition, à chaque demi-tour des plateaux 1 et 2, les deux paires de gabarits 25, 27; 26, 28 occupant des positions angulaires correspondantes sur les plateaux 1 et 2, se succèdent dans une position déterminée située au-dessous d'une trémie d'alimentation 31 en électrodes doubles 30. La partie supérieure évasée de cette trémie 31 se situe elle-même au-dessous d'un dispositif d'alimentation constitué par deux paires des bandes transporteuses crantées 32, 33 respectivement 34, 35 (figs 1 et 2), la bande transporteuse 33 étant cachée, les bandes transporteuses de chaque paire présentant le même écartement que celui qui sépare les gabarits 25, 27 et 26, 28. De ce fait, les pattes de connexion 30a des électrodes doubles 30 reposent sur les bandes transporteuses d'une même paire. Les électrodes négatives sont transportées par une de ces paires de bandes transporteuses par exemple par la paire de bandes transporteuses 32, 33 tandis que la paire de bandes transporteuses 34, 35 porte les doubles électrodes positives. Chaque paire de bandes transporteuses 32, 33 et 34, 35 est entraînée indépendemment par un moteur pas à pas (non représenté) et un mécanisme de transmission 36, respectivement 37 du même type que celui illustré par la fig 3 pour l'entraînement des plateaux 1 et 2.

La trémie 31 d'alimentation en électrodes doubles 30, est montée coulissante entre une paire de rails de guidage 38, et est en prise avec une vis d'entraînement sans fin 39, actionnée par un moteur 40. Grâce à ces rails de guidage 38 et à ce mécanisme d'entraînement, la sortie de la trémie peut être amenée à volonté au droit de n'importe quelle rainure de positionnement 29 des gabarits 25 à 28.

Un mécanisme de coupe et de soudage, constitué par un fil de chauffage électrique par effet Joule 41 relié à une source de courant S est monté oscillant par l'intermédiaire d'un levier 42 actionné par un électro-aimant 43.

Les moteurs 17 et 40, et ceux des mécanismes de transmission 36, 37 ainsi que les électro-aimants 15, 16 et 43 sont connectés à un poste de commande programmable (non représenté) destiné à synchroniser les différentes fonctions, ainsi qu'à adapter le cycle de fonctionnement au nombre d'électrodes respectives des paquets d'électrodes ainsi qu'à l'ordre de ces électrodes.

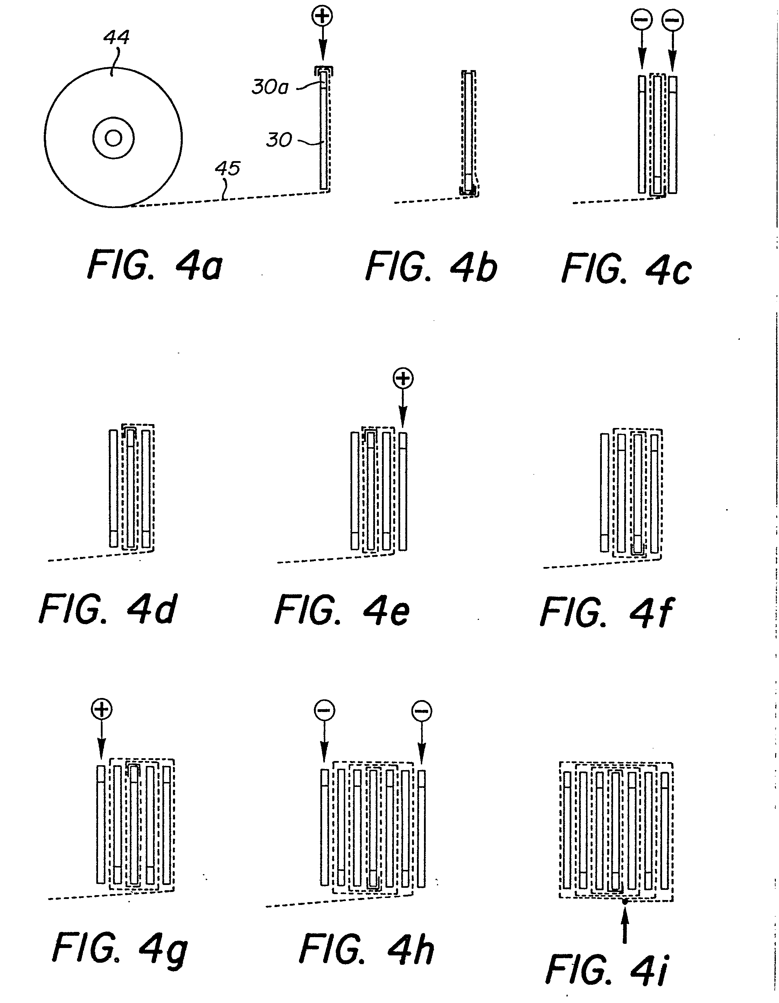

Les différentes fonctions du dispositif qui vient d'être décrit seront analysées maintenant en détail à l'aide des figs 4a à 4j. Un rouleau 44 d'un ruban 45 de matériau à perméabilité ionique, dans cet exemple, un matériau non-tissé destiné à former des nappes de séparation entre les électrodes doubles 30 est monté pivotant autour d'un axe parallèle à l'axe de pivotement des plateaux 1 et 2. Une première électrode double 30, positive dans cet exemple, est placée dans la rainure de positionnement 29 centrale de la paire de gabarits 25, 27. L'extrémité du ruban 45 est amenée contre le bord supérieur de cette électrode double 30 en passant par son bord inférieur et sa face arrière par rapport au rouleau 44. Cette extrémité du ruban 45 est fixée à ce bord supérieur par exemple au moyen d'une agraphe non représentée. Les plateaux 1 et 2 sont alors entraînés d'un demi tour (fig. 4b) dans le sens contraire des aiguilles de la montre de sorte que les deux faces de l'électrode positive double 30 sont recouvertes d'une nappe de non-tissé. Une électrode négative double 30 est amenée du côté externe de chacune des nappes formées par le ruban 45. Un nouveau demi tour est effectué par les plateaux 1 et 2 dans le même sens euroulant le ruban 45 autour de la face externe de l'électrode négative double déposée à gauche de l'électrode positive double et amenant cette électrode négative à la droite de l'électrode positive avec ses pattes de connexion 30a dirigées vers le bas. La seconde électrode négative double, qui n'est pas encore enveloppée, est retenue par la portion du ruban 45 de non-tissé reliant le paquet d'électrodes en formation au rouleau 44.

Une seconde électrode positive double est disposée du côté externe de la nappe de ruban recouvrant la première électrode négative (fig. 4e). Une rotation complète des plateaux 1 et 2 enveloppe la seconde électrode négative double (fig. 4f) ainsi que la seconde électrode positive double (fig. 4g). La troisième électrode positive double est alors placée dans la troisième paire de rainures de positionnement des gabarits 25, 27. Le demi tour suivant des plateaux 1 et 2, toujours dans le sens contraire des aiguilles de la montre, enveloppe cette troisième électrode positive double (fig. 4h). Les deux dernières électrodes négatives doubles sont alors placées de part et d'autre des 2e et 3e électrodes positives doubles (fig. 4i) et les plateaux 1 et 2 exécutent une rotation complète au cours de laquelle le ruban 45 enveloppe les deux dernières électrodes négatives doubles.

Ensuite le ruban 45 est soudé et coupé à l'aide du fil 41, chauffé par effet Joule, et pressé contre la face externe du ruban 45 par le levier 42 et l'électro-aimant 43.

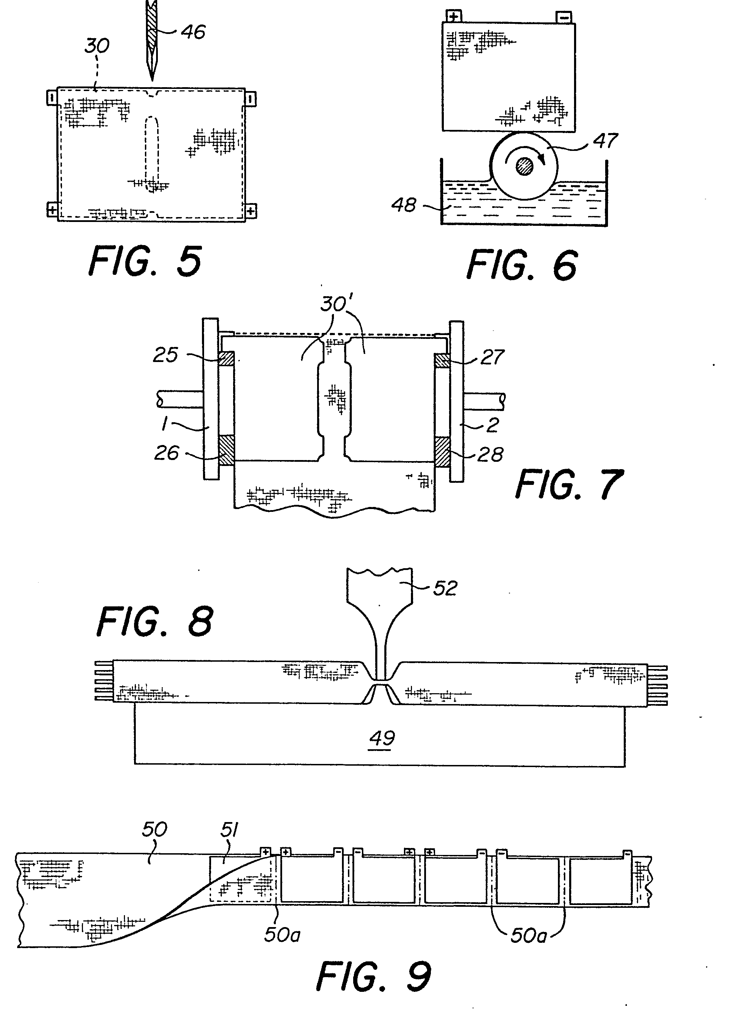

Le paquet d'électrodes doubles 30 est alors coupé à l'aide d'un couteau 46 (fig. 5) de manière à former deux paquets identiques, puis la face coupée de chaque paquet destinée à former sa face inférieure passe sur un rouleau chauffant 47 (fig. 6) dont la surface est recouverte d'une matière thermoplastique fondue en la trempant partiellement dans un bain 48 de cette matière fondue, de manière à enduire la face inférieure des paquets pour fermer ainsi les fonds respectifs des divers compartiments formés entre les nappes de non-tissé.

Bien que l'on ait décrit ci-dessus un mode de mise en oeuvre du procédé selon lequel on fabrique simultanément un paquet d'électrodes doubles que l'on sépare par la suite pour former deux paquets identiques, on peut imaginer, en variante, d'utiliser des électrodes 30 déjà séparées et de les amener deux à deux sur les gabarits 25, 27 ou 26, 28 (fig. 7). Selon cette variante, un intervalle est ménagé entre les électrodes 30' et le double paquet d'électrodes est constitué de la même manière qui vient d'être décrite pour le paquet formé d'électrodes doubles solidaires. Une fois que le double paquet est terminé et que l'extrémité du ruban 45 de non-tissé a été soudée et coupée, on effectue une coupure du ruban dans l'intervalle séparant les deux paquets d'électrodes 30' pour séparer les deux paquets en soudant de part et d'autre de la coupure à l'aide d'une sonotrode 52 et d'une enclume 49 (fig. 8) de sorte que toutes les nappes du ruban 45 sont soudées les unes aux autres sous les bords inférieurs des électrodes. La surépaisseur constituée par cette soudure n'est pas gênante; au contraire, elle peut assurer une circulation de l'électrolyte dans la batterie. En outre, le fait que le ruban de non-tissé formant les nappes séparant les électrodes à l'intérieur de chaque paquet d'électrodes soit plus large que la hauteur de ces électrodes et déborde de leur bord inférieur, assure une isolation électrique complète entre les bases des électrodes.

Bien entendu, dans une variante non représentée, il est également possible d'imaginer le même procédé de fabrication d'un seul paquet à la fois au lieu de deux sans changer notablement le procédé, les bords inférieurs des nappes du ruban 45 dépassant ceux des électrodes et étant soudés les uns aux autres comme on vient de le décrire dans le cas de la variante à deux électrodes séparées.

Outre les avantages déjà cités du procédé et du dispositif pour sa mise en oeuvre, on peut encore mentionner le fait que les gabarits 25 à 28 permettent d'aligner avec précision les pattes de connexion 30a des électrodes.

En tant que matériau utilisé pour former le ruban 45, il est envisagé d'utiliser un non-tissé de polyéthylène de $50g/m^2$ obtenu par voie électrostatique, notamment à l'aide du procédé décrit dans le brevet US 4 230 650, déposé sur un papier et en formant chaque ruban 45 à l'aide de deux couches de papier recouvertes sur une face avec leurs faces non recouvertes adjacentes, et leurs faces recouvertes de non-tissé apparaissant alors sur les deux faces externes du ruban 45. Un tel matériau présente d'excellentes qualités filtrantes et assure une protection efficace contre les croissances dendritiques susceptibles de se développer entre les électrodes, responsables de courts-circuits mettant hors d'usage la batterie.

On peut encore signaler que, un paquet d'électrode étant généralement formé d'un nombre impair d'électrodes et le nombre d'électrodes négatives étant supérieur d'une unité à celui des électrodes positives, l'électrode par laquelle on commencera à former le paquet d'électrodes sera toujours l'une des électrodes positives ou négatives se trouvant en nombre impair dans le paquet d'électrodes terminé.

La fig. 9 est une variante du paquet d'électrodes tel qu'il a déjà été représenté jusqu'ici, dans lequel un ruban 50, dont la largeur est sensiblement égale au double de la hauteur des électrodes 51, est plié longitudinalement en deux.

Une partie des électrodes 51, de préférence les électrodes positives, sont placées avec les pattes de connexion tête-bêche entre les deux parties repliées du ruban, et les électrodes négatives sont disposées avec leurs pattes de connexion tête-bêche, mais décalées d'une électrode par rapport aux électrodes positives, contre une face externe du ruban replié mais à l'intérieur des plis transversaux 50a formés entre les électrodes 51 en tournant toujours le ruban dans le même sens. Ce mode d'enveloppement des électrodes présente les mêmes caractéristiques que les paquets d'électrodes précédents, mais évite le soudage ou le revêtement de la face inférieure du paquet, les électrodes négatives et positives se trouvant respectivement à l'extérieur et à l'intérieur du pli longitudinal du ruban 50. Par contre la mise en place des électrodes et, en particulier, le positionnement des pattes de connexion supposent deux positions distinctes aussi bien pour les électrodes positives que pour les électrodes négatives.

REVENDICATIONS

1. Paquet d'électrodes pour générateur électrochimique formé de deux séries d'électrodes de polarités positives, respectivement négatives alternées, ces électrodes étant réunies par un ruban passant entre elles et autour de deux de leurs bords opposés, caractérisé par le fait que ce ruban s'étend d'une électrode centrale vers les électrodes extérieures, chaque nappe de ruban parallèle aux électrodes passant entre deux électrodes adjacentes, les portions de ruban s'étendant entre ces nappes enveloppant les bords latéraux de ces électrodes.

2. Paquet d'électrodes selon la revendication 1, caractérisé par le fait que les bords des nappes adjacentes au bord inférieur des électrodes d'au moins une même polarité sont réunis pour former des pochettes fermées le long de trois côtés de ces électrodes.

3. Paquet d'électrodes selon la revendication 1, caractérisé par le fait que la réunion desdites nappes le long de leurs bords inférieurs est constituée par un pli longitudinal réalisé au centre dudit ruban.

4. Paquet d'électrodes selon la revendication 3, caractérisé par le fait que les électrodes positives sont disposées côte-à-côte entre les faces du ruban situées à l'intérieur dudit pli longitudinal, avec leurs pattes de connexion tête-bêche et que les électrodes négatives sont disposées contre une des faces du ruban située à l'extérieur dudit pli mais à l'intérieur des plis transversaux résultant de la rotation du ruban autour des bords latéraux des électrodes, la première de ces électrodes négative étant disposée vis-à-vis de la seconde électrode positive en partant de l'électrode positive centrale, mais avec sa patte de connexion disposée vis-à-vis du bord latéral de cette seconde électrode positive éloigné de sa patte de connexion, les autres électrodes négatives étant disposées tête-bêche à la suite de la première.

5. Paquet d'électrodes selon la revendication 1, caractérisé par le fait que les bords inférieurs desdits compartiments sont fermés après durcissement d'un matériau thermoplastique appliqué à l'état fondu entre ces bords.

6. Paquet d'électrodes selon la revendication 1, caractérisé par le fait que les bords inférieurs desdites nappes dépassent des bords inférieurs des électrodes et sont réunis les uns aux autres par une soudure commune.

7. Procédé de fabrication du paquet d'électrodes selon la revendication 1, caractérisé par le fait que l'on enroule une nappe d'au moins un ruban de chaque côté d'une électrode rectangulaire de l'une desdites polarités présentant une patte de connexion à proximité de l'un de ses bords latéraux, qu'on applique contre la face externe de chacune de ces nappes une électrode de l'autre polarité présentant chacune une borne de connexion à proximité de l'autre bord latéral, qu'on enroule une nappe dudit ruban autour de chacune de ces deux électrodes, qu'on ajoute de part et d'autre des faces extérieures de ces nappes, deux électrodes de la première polarité avec leurs bornes respectives disposées vis-à-vis de la borne de la première électrode, qu'on enroule autour de ces électrodes une nappe dudit ruban et ainsi de suite en ajoutant chaque fois deux électrodes alternativement de l'une et l'autre polarité jusqu'à l'obtention du nombre désiré d'électrodes de chaque polarité, qu'on coupe ledit ruban, qu'on fixe son extrémité contre la face externe de l'une des nappes externes et qu'on ferme le fond de chaque compartiment ménagé entre deux nappes adjacentes.

8. Procédé selon la revendication 7, caractérisé par le fait que l'on dispose chaque fois côte-à-côte deux électrodes de même polarité en symétrie miroir et que l'on enroule ledit ruban dont la largeur est au moins égale à deux fois la hauteur de chaque électrode autour des bords latéraux de ces deux électrodes et que l'on sépare ensuite les deux paquets d'électrodes ainsi formés.

9. Procédé selon la revendication 8, caractérisé par le fait que ces deux électrodes disposées côte-à-côte sont rattachées l'une à l'autre par leurs bords inférieurs respectifs.

10. Procédé selon la revendication 8, caractérisé par le fait que les deux électrodes disposées côte-à-côte sont écartées l'une de l'autre et que l'on sépare ensuite les deux paquets en soudant simultanément l'ensemble desdites nappes les unes aux autres.

11. Procédé selon la revendication 10, caractérisé par le fait que l'on soude lesdites nappes par ultra-sons.

12. Dispositif pour la mise en oeuvre du procédé selon la revendication 7, caractérisé par le fait qu'il comporte deux gabarits de positionnement des pattes de connexion des électrodes des polarités positive, respectivement négative, un organe d'entraînement monté autour d'un axe de rotation, cet organe portant lesdits gabarits disposés à 180° l'un de l'autre, un rouleau d'alimentation dudit ruban monté autour d'un axe de rotation parallèle à celui dudit organe d'entraînement, deux dispositifs d'alimentation, des paires d'électrodes négatives respectivement positives des deux gabarits respectifs et des moyens pour couper ledit ruban et souder l'extrémité de sa portion enroulée, autour du paquet d'électrodes.

13. Dispositif selon la revendication 12, caractérisé par le fait qu'il comporte deux paires de gabarits de positionnement des pattes de connexion des électrodes des polarités positive, respectivement négative, disposées en symétrie miroir, deux organes d'entraînement montés autour d'un axe de rotation commun, chacun de ces organes portant un des gabarits de chacune desdites paires et des moyens pour écarter lesdits organes d'entraînement l'un de l'autre pour libérer les paires de paquets d'électrodes.

FIG. 1

FIG. 2

FIG. 3

FIG. 4a    FIG. 4b    FIG. 4c

FIG. 4d    FIG. 4e    FIG. 4f

FIG. 4g    FIG. 4h    FIG. 4i

FIG. 5

FIG. 6

FIG. 7

FIG. 8

FIG. 9

# 0064943

Office européen des brevets

## RAPPORT DE RECHERCHE EUROPEENNE

Numéro de la demande

EP  82 81 0173

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl. ³) |
| Y | FR-A-1 203 505  (YARDNEY) *Page 3, colonne de gauche; dernier alinéa; colonne de droite* | 1,2 | H 01 M  10/04 |
| | --- | | |
| Y | US-A-3 871 921  (THEODORE R.BEATTY) *Colonne 5, lignes 50-68; colonne 6, lignes 1-40* | 1,2 | |
| | --- | | |
| D,A | US-A-3 425 871  (CARL BERGER) | | |
| | --- | | |
| A | FR-A-1 134 952  (YARDNEY) | | |
| | --- | | DOMAINES TECHNIQUES RECHERCHES (Int. Cl. ³) |
| A | US-A-4 026 000  (KENNETH ARNOLD ANDERSON) | | |
| | --- | | H 01 M  10/04 |
| A | FR-A-1 100 711  (YARDNEY) | | |
| | --- | | |
| A | US-A-2 932 409  (CROMPTON BATTERIES) | | |
| | ----- | | |

Le présent rapport de recherche a été établi pour toutes les revendications

| Lieu de la recherche | Date d'achèvement de la recherche | Examinateur |
|---|---|---|
| LA HAYE | 13-08-1982 | DE VOS L.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82